# DEMANDE DE BREVET EUROPEEN

(11) **EP 0 921 102 A1**
(43) Date de publication de la demande: **09.06.1999**
(21) Numéro de dépôt: 98402657.5
(22) Date de dépôt: 26.10.1998
(51) Int. Cl.: C02F 1/66, B01F 5/02, B01F 3/04, B24C 1/00

(54) **Dispositif de distribution de CO2 et procédés de traitement d'un effluent et de nettoyage de surface l'utilisant**

(30) Priorité: 05.12.1997 FR 9715409
(71) Demandeur: Carboxyque Française, 92088 La Défense (FR)
(72) Inventeur: de Rigaud, Jean-Mathieu, c/o Carboxyque Française, 92088 Paris La Defense (FR); Gigant, Bernard, c/o Carboxyque Française, 92088 Paris La Defense (FR)
(74) Mandataire: Vesin, Jacques

(57) **Abrégé**

L'invention concerne un dispositif (1) de distribution de CO₂ comprenant des moyens (2) de raccordement à une source (3) de CO₂ liquide sous pression et des moyens (4) de détente du CO₂ liquide sous pression et d'éjection du mélange obtenu. Les moyens (4) de détente et d'éjection comprennent des moyens (8, 9) de détente progressive adaptés pour distribuer à leur sortie un jet d'un mélange triphasique de CO₂.

Application au traitement d'effluents liquides et au nettoyage de surfaces.

## Description

La présente invention concerne un dispositif de distribution de CO₂ comprenant des moyens de raccordement à une source de CO₂ liquide sous pression et des moyens de détente du CO₂ liquide sous pression et d'éjection du mélange obtenu.

L'invention s'applique plus particulièrement au traitement d'effluents liquides et au nettoyage de surfaces.

Dans de nombreux domaines d'activité comme, par exemple, les industries agro-alimentaires, pétrolières, textiles, chimiques ou métallurgiques, le traitement des effluents liquides, et notamment la régulation de leurs pH, est nécessaire.

L'injection de CO₂ dans un effluent liquide permet d'abaisser le pH de ce dernier. En effet, l'hydrolyse du CO₂ dissous conduit à la formation d'acide carbonique (H₂CO₃) puis d'hydrogénocarbonate (HCO₃⁻) ou de carbonate (CO₃²⁻) en fonction du pH atteint.

Jusqu'à présent, l'injection de CO₂ dans un effluent liquide à traiter est assurée sous forme gazeuse. Cependant, la dissolution du CO₂ gazeux ainsi injecté est faible et impose, pour atteindre un effet neutralisant efficace, de nombreuses contraintes aux installations de traitement des effluents et notamment aux dispositifs de distribution de CO₂, qui les rendent particulièrement coûteux.

Par ailleurs, on connaît l'utilisation de jets de CO₂ liquide obtenus par détente de CO₂ liquide sous pression pour nettoyer des surfaces. Cependant, l'effet abrasif de tels jets peut s'avérer insuffisant dans certaines applications de nettoyage.

L'invention a pour but de résoudre ces problèmes en fournissant un dispositif de distribution de CO₂ simple, économique et assurant une efficacité élevée. En particulier, elle vise à obtenir une bonne dissolution du mélange de CO₂ produit lors de son injection dans un effluent liquide à traiter, ainsi qu'un effet abrasif satisfaisant pour le nettoyage de surfaces.

A cet effet, l'invention a pour objet un dispositif de distribution de CO₂ comprenant des moyens de raccordement à une source de CO₂ liquide sous pression et des moyens de détente du CO₂ liquide sous pression et d'éjection du mélange obtenu, caractérisé en ce que les moyens de détente et d'éjection comprennent des moyens de détente progressive adaptés pour distribuer à leur sortie un jet d'un mélange triphasique de CO₂.

Selon des modes particuliers de réalisation, le dispositif de distribution de CO₂ peut comprendre l'une ou plusieurs des caractéristiques suivantes :
- les moyens de détente et d'éjection comprennent, successivement par rapport à l'écoulement de CO₂, un premier tube ayant une première section, des moyens d'étranglement de la section de passage du CO₂, et un deuxième tube de détente progressive et d'éjection du CO₂, ce deuxième tube ayant une deuxième section inférieure à la première section, l'agencement étant tel que le CO₂ atteint son point triple dans le deuxième tube ;
- lesdits moyens d'étranglement comprennent un orifice calibré de section inférieure à la deuxième section ;
- les moyens d'étranglement comprennent une électrovanne qui comporte une sortie de section réduite formant l'orifice calibré ;
- les moyens d'étranglement comprennent une électrovanne et l'orifice calibré est ménagé dans un opercule situé en aval de l'électrovanne ;
- la source contenant du CO₂ à -20° C et 20 bars, la première section et la deuxième section sont comprises respectivement entre environ 2,25 et 3,24 cm² et entre environ 0,36 cm² et 0,81 cm², et la section de l'orifice calibré est comprise entre environ 0,20 et 1,77 mm² ;
- le deuxième tube de détente et d'éjection a une longueur comprise entre environ 4 et 200 cm.

L'invention a également pour objet un procédé de traitement d'un effluent liquide, par injection de CO₂ dans ledit effluent, caractérisé en ce qu'on immerge dans ledit effluent à traiter la sortie des moyens de détente et d'éjection d'au moins un dispositif de distribution de CO₂ tel que défini ci-dessus.

Selon une variante, la sortie des moyens de détente et d'éjection est immergée dans une conduite de canalisation d'un écoulement de l'effluent à traiter pour injecter le mélange triphasique de CO₂ produit à contre-courant dans ledit écoulement de l'effluent à traiter.

L'invention a finalement pour objet un procédé de nettoyage de surface, caractérisé en ce qu'on dirige vers une surface à nettoyer le jet de mélange triphasique de CO₂ produit par au moins un dispositif de distribution de CO₂ tel que défini ci-dessus.

L'invention sera mieux comprise à la lecture de la description qui va suivre, donnée uniquement à titre d'exemple, et faite en se référant aux dessins annexés sur lesquels :
- la figure 1 est une vue latérale schématique d'un dispositif de distribution selon l'invention,
- la figure 2 est une vue latérale schématique illustrant la mise en oeuvre d'un procédé de traitement d'un effluent selon l'invention,
- la figure 3 est une vue schématique de dessus illustrant la mise en oeuvre d'une variante d'un procédé de traitement d'un effluent selon l'invention, et
- la figure 4 est une vue schématique illustrant la mise en oeuvre d'un procédé de nettoyage de surface selon l'invention.

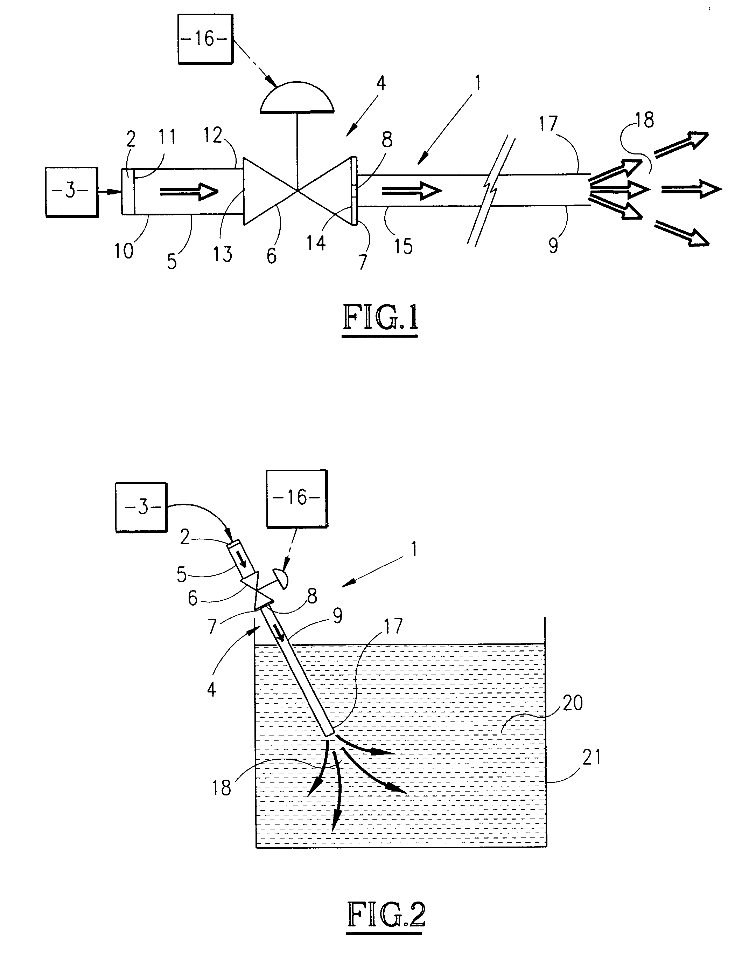

La figure 1 représente schématiquement une lance ou dispositif 1 de distribution de CO₂ comprenant essentiellement des moyens 2 de raccordement à une source 3 de CO₂ liquide sous pression et des moyens 4 de détente du CO₂ liquide sous pression et d'éjection du mélange obtenu.

Les moyens 4 de détente et d'éjection comprennent un premier tube 5 en cuivre à base sensiblement circulaire, un électrovanne d'arrêt 6, un opercule 7 en cuivre percé d'un orifice calibré 8 et un deuxième tube 9 en cuivre à base sensiblement circulaire.

La source 3 est une source de CO₂ liquide à -20°C et sous 20 bars absolus.

L'électrovanne 6 est une électrovanne à deux voies.

Une entrée des moyens 2 de raccordement est reliée à la source 3 de CO₂ liquide.

Le premier tube 5 est relié, d'une part, par une entrée 10 à une sortie 11 des moyens 2 de raccordement et, d'autre part, par une sortie 12 à une entrée 13 de l'électrovanne 6.

L'opercule 7 est intercalé entre une sortie 14 de l'électrovanne 6 et une entrée 15 du deuxième tube 9. L'orifice calibré 8 est sensiblement circulaire et centré sur l'axe du deuxième tube 9.

Le premier tube 5 et le deuxième tube 9 sont sensiblement coaxiaux.

Le diamètre intérieur du deuxième tube 9, environ 1,02 cm (3/8 de pouce français), est inférieur au diamètre intérieur du premier tube 5, environ 1,69 cm (5/8 de pouce français). Le diamètre de l'orifice calibré 8, environ 1 mm, est inférieur, d'une part, au diamètre de l'entrée 13 et de la sortie 14 de l'électrovanne 6, environ 1,69 cm (5/8 de pouce), et, d'autre part, au diamètre intérieur du deuxième tube 9.

Le deuxième tube 9 a une longueur d'environ 1,5 m.

La lance 1 comprend, reliés à l'électrovanne 6, des moyens 16 de commande de son ouverture, par exemple une unité électronique de pilotage ou un organe manuel destiné à être actionné par un utilisateur.

Une sortie 17 du deuxième tube 9 forme la sortie des moyens 4 de détente et d'éjection et la sortie de la lance 1.

Le fonctionnement de la lance 1 est le suivant, l'écoulement de CO₂ étant schématisé par des flèches en trait gras sur la figure 1.

Lorsque les moyens 16 de commande déclenchent l'ouverture de l'électrovanne 6, le CO₂ liquide s'écoule dans le premier tube 5, traverse l'électrovanne 6 puis l'orifice calibré 8 en subissant une première détente.

La pression du CO₂ à la sortie de l'orifice calibré 8 est légèrement supérieure à la pression de point triple du CO₂ (5,28 bars absolus).

Le CO₂ se détend ensuite progressivement dans le deuxième tube 9 jusqu'à atteindre sa pression de point triple.

Lorsque le CO₂ atteint cette pression, un mélange triphasique de CO₂ apparaît.

Ce mélange triphasique de CO₂ se détend alors progressivement dans le deuxième tube 9 jusqu'à sa sortie 17, où le mélange triphasique de CO₂ est éjecté sous la forme d'un jet 18.

Lors de la détente progressive du CO₂ dans le deuxième tube 9, le mélange triphasique formé est accéléré par le CO₂ gazeux et, simultanément, la neige carbonique du mélange triphasique se sublime partiellement. Grâce à ce phénomène dynamique et au faible temps de séjour du CO₂ dans le tube 9, les phases solide et liquide sont encore largement présentes à la sortie 17.

Les dimensions du premier tube 5, du deuxième tube 9 ainsi que de l'orifice calibré 8 peuvent varier en fonction de l'application envisagée. Ainsi, selon des variantes, la section du premier tube 5, ou première section, est comprise entre environ 2,25 et 3,24 cm² (ce qui correspond à des diamètres de tubes compris entre environ 5/8 et ¾ de pouce français), la section du deuxième tube, ou deuxième section, est comprise entre 0,36 cm² et 0,81 cm² (ce qui correspond environ à des diamètres de tubes compris entre environ ¼ et de 3/8 de pouce français). Dans ces variantes, la section de l'orifice calibré est comprise entre environ 0,20 et 1,77 mm² (ce qui correspond environ à des diamètres de 0,5 et 1,5 mm).

Dans une variante non représentée, la section de la sortie 14 de l'électrovanne 6 est réduite et forme directement l'orifice calibré 8.

La figure 2 illustre schématiquement l'utilisation de la lance 1 de la figure 1 dans un procédé de traitement d'un effluent liquide 20. L'effluent liquide 20 à traiter est contenu dans un bassin de neutralisation 21 dont il s'écoule, par exemple, par déversement.

La hauteur de l'effluent 20 dans le bassin 21 est environ de 2,5 m.

La sortie 17 de la lance 1 est immergée d'environ 80 cm dans l'effluent 20. L'axe du deuxième tube 9 est incliné d'environ 60° par rapport à l'horizontale. Pour diminuer le pH de l'effluent 20, les moyens 16 de commande déclenchent l'ouverture de l'électrovanne 6, ce qui provoque la production d'un jet 18 de CO₂ triphasique et l'injection de CO₂ triphasique dans l'effluent 20.

L'accélération du mélange triphasique dans le deuxième tube 9 assurée par le CO₂ gazeux procure une vitesse suffisante au mélange triphasique du jet 18 pour traverser l'effluent 20 sur une hauteur d'environ 60 cm.

On constate une meilleure dissolution du CO₂ injecté par la lance 1 dans l'effluent 20 que dans le cas d'une injection classique de CO₂ gazeux.

Cette meilleure dissolution est due, d'une part, à la présence des phases liquide et solide du CO₂ et donc au caractère triphasique du mélange de CO₂ injecté et, d'autre part, à la vitesse du jet 18 produit par la lance 1, qui engendre une agitation forcée dans le bassin 21.

Cette meilleure dissolution permet de limiter la hauteur de l'effluent 20 dans le bassin 21 pour assurer une neutralisation rapide et satisfaisante de son pH par hydrolyse du CO₂ dissous, par exemple jusqu'à environ 1,40 m dans la mise en oeuvre représentée sur la figure 2.

De plus, aucun problème de gel n'apparaît au niveau de la sortie 17 du deuxième tube 9.

Bien sûr, la lance 1 peut être disposée et orientée de manière différente, par exemple avec sa sortie au fond du bassin 21 et orientée latéralement ou vers le haut.

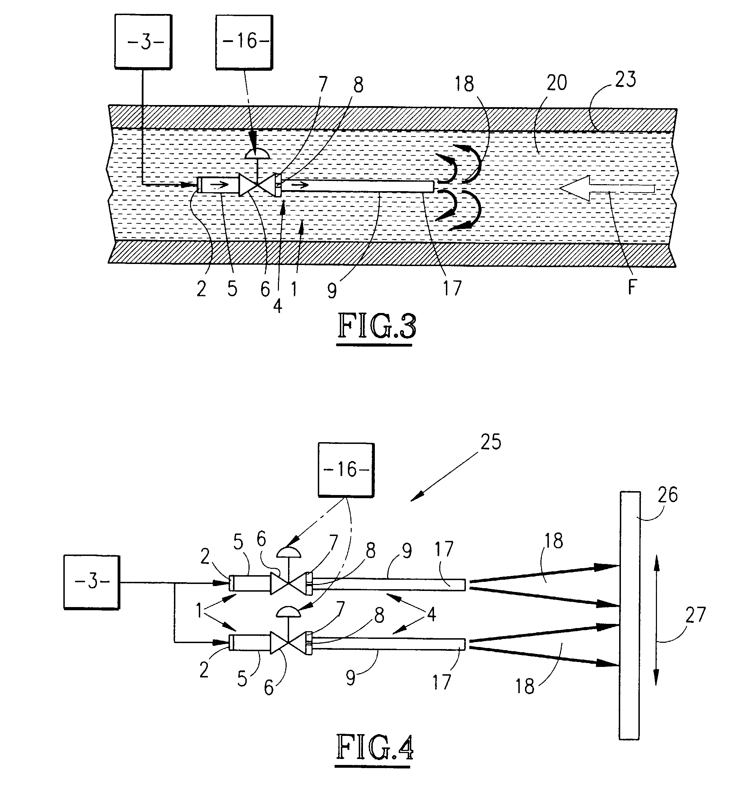

La figure 3 est une vue de dessus qui illustre schématiquement l'utilisation de la lance 1 de la figure 1 pour neutraliser un effluent 20 s'écoulant dans une rigole 23 de canalisation. L'écoulement de l'effluent 20 est schématisé par une flèche F.

La sortie 17 de la lance 1 est immergée dans l'écoulement de l'effluent 20. La lance 1 est orientée de manière à produire un jet 18 à contre-courant de l'écoulement de l'effluent 20. L'éjection du mélange triphasique de CO₂ de la lance 1 à contre-courant permet d'améliorer la dissolution du CO₂ injecté dans l'effluent 20 à traiter.

La figure 4 illustre schématiquement l'utilisation d'une variante de la lance de la figure 1 dans une installation 25 de nettoyage de surface.

Cette installation comprend essentiellement deux lances 1, une unité électronique commune 16 de pilotage des électrovannes 6 des lances 1, une source commune 3 de CO₂ liquide sous pression, une surface 26 à nettoyer et des moyens 27 de déplacement de la surface 26.

Les lances 1 se distinguent de la lance de la figure 1 en ce que la longueur de leurs deuxièmes tubes 9 est d'environ 10 cm et en ce que le diamètre de leurs orifices calibrés 8 est d'environ 0,7 mm.

Les lances 1 sont toutes deux raccordées à la source 3 et reliées à l'unité de pilotage 16.

Les sorties 17 des lances 1 sont orientées vers la surface 26 à nettoyer.

Pour nettoyer la surface 26, l'unité de pilotage 16 déclenche l'ouverture des électrovannes 6 des lances 1 et ainsi l'application de jets 18 de CO₂ triphasique sur la surface 26.

Les moyens 27 de déplacement permettent d'appliquer les jets 18 sur toute la surface 26.

La présence de particules de neige dans les jets 18 confère un effet abrasif à ces derniers. La longueur réduite des deuxièmes tubes 9 des lances 1 par rapport à la lance de la figure 1 permet d'obtenir un pourcentage plus important de neige carbonique dans les jets 18 produits.

De plus, la vitesse des jets 18 obtenue grâce à la détente progressive dans les deuxièmes tubes 9 permet d'obtenir un impact suffisant des particules de neige, de liquide et du gaz sur la surface 26 pour éliminer des poussières ou salissures résistant à un flux d'air comprimé.

En fonction du type de surfaces à nettoyer et de poussières ou salissures à enlever, les dimensions des premiers tubes 5, des deuxièmes tubes 9 et des orifices calibrés 8 des lances 1 peuvent varier de manière à modifier, d'une part, la vitesse des jets 18, et d'autre part les proportions relatives des différentes phases du CO₂ dans les jets 18.

## Revendications

1. Dispositif (1) de distribution de CO₂ comprenant des moyens (2) de raccordement à une source (3) de CO₂ liquide sous pression et des moyens (4) de détente du CO₂ liquide sous pression et d'éjection du mélange obtenu, caractérisé en ce que les moyens (4) de détente et d'éjection comprennent des moyens (8, 9) de détente progressive adaptés pour distribuer à leur sortie (17) un jet (18) d'un mélange triphasique de CO₂.

2. Dispositif selon la revendication 1, caractérisé en ce que les moyens (4) de détente et d'éjection comprennent, successivement par rapport à l'écoulement de CO₂, un premier tube (5) ayant une première section, des moyens (6, 8) d'étranglement de la section de passage du CO₂, et un deuxième tube (9) de détente progressive et d'éjection du CO₂, ce deuxième tube (9) ayant une deuxième section inférieure à la première section, l'agencement étant tel que le CO₂ atteint son point triple dans le deuxième tube (9).

3. Dispositif selon la revendication 2, caractérisé en ce que lesdits moyens (6, 8) d'étranglement comprennent un orifice calibré (8) de section inférieure à la deuxième section.

4. Dispositif selon la revendication 3, caractérisé en ce que les moyens (6) d'étranglement comprennent une électrovanne (6) qui comporte une sortie (14) de section réduite formant l'orifice calibré.

5. Dispositif selon la revendication 3, caractérisé en ce que les moyens (6, 8) d'étranglement comprennent une électrovanne (6) et en ce que l'orifice calibré (8) est ménagé dans un opercule (7) situé en aval de l'électrovanne (6).

6. Dispositif selon l'une quelconque des revendications 3 à 5, caractérisé en ce que, la source (3) contenant du CO₂ à -20° C et 20 bars, la première section et la deuxième section sont comprises respectivement entre environ 2,25 et 3,24 cm² et entre environ 0,36 cm² et 0,81 cm², et en ce que la section de l'orifice calibré est comprise entre environ 0,20 et 1,77 mm².

7. Dispositif selon l'une quelconque des revendications 2 à 6, caractérisé en ce que le deuxième tube (9) de détente et d'éjection a une longueur comprise entre environ 4 et 200 cm.

8. Procédé de traitement d'un effluent (20), notamment d'un effluent liquide, par injection de CO₂ dans ledit effluent (20), caractérisé en ce qu'on immerge dans ledit effluent à traiter (20) la sortie (17) des moyens (4) de détente et d'éjection d'au moins un dispositif (1) de distribution de CO₂ selon l'une quelconque des revendications 1 à 7.

9. Procédé selon la revendication 8, caractérisé en ce que la sortie (17) des moyens (4) de détente et d'éjection est immergée dans une conduite (23) de canalisation d'un écoulement de l'effluent à traiter (20) pour injecter le mélange triphasique de CO₂ produit à contre-courant dans ledit écoulement de l'effluent à traiter (20).

10. Procédé de nettoyage de surface, caractérisé en ce qu'on dirige vers une surface (26) à nettoyer le jet (18) de mélange triphasique de CO₂ produit par au moins un dispositif (1) de distribution de CO₂ selon l'une quelconque des revendications 1 à 7.
